# EUROPEAN PATENT APPLICATION

(11) **EP 4 628 971 A1**
(43) Date of publication of application: **08.10.2025**
(21) Application number: 24168873.8
(22) Date of filing: 06.04.2024
(51) Int. Cl.: G02B 27/09

(54) **LASER HOMOGENIZER BASED ON LIGHT PIPE INTEGRATION AND MICRO-OPTICS**

(71) Applicant: Laserworld AG, 8574 Lengwil (CH)
(72) Inventor: Luque, Jordi, 83626 Valley (DE)
(74) Representative: Mzb PartmbB

(57) **Abstract**

Provided is an invention related to laser beam shaping with the goal to achieve a controlled intensity profile, usually top-hat distribution, created by several laser beam sources with incident non-uniform beam intensity profile (incident gaussian laser beam/s or other higher order multi-transverse modes, in the visible, IR or UV spectrum).

The laser beam homogenizer-expander uses a main beam shaper element or Light Pipe (light integrator), and a second beam shaper element or microlenses array (MLA), that is, second light integrator which defines the top-hat intensity distribution output, thus providing a second homogenization stage.

The invention also includes several optics like light diffusers, mirrors, dichroic filters, beam shaping lenses, light pipe and microlenses, to achieve a good homogenization at the desired output angle.

The invention is designed to fully integrate/blend one or several wavelength laser sources, like red, green, and blue as an example, but other wavelengths in the visible/non-visible spectrum can be integrated as well.

If multi-wavelengths are used as initial laser source, the light engine output provides a good homogenization and color blend, with almost no noticeable speckle, near top-hat intensity profile and no visible hot spots or interference patterns.

The invention is useful for many applications, like microscopy, material processing, fluorescence, lighting fixtures, holography, fiber coupling etc., where spectral properties of laser light is required (narrowband, monochromaticity) but a uniform distribution of the intensity is necessary at the same time.

## Description

### Technical Field

This invention belongs to the field of laser beam shaping and relates to a laser emission source suitable for spectroscopy, material processing, fluorescence, heat treatment, communication, entertainment, and many other applications.

### Background Art

Most laser types in use today have an output beam profile with circular or elliptical cross sections, with either a Gaussian or near-Gaussian intensity profile distribution. This is acceptable and often advantageous for many applications where the laser beam is focused to a small spot. However, there are also many different applications where a uniform, even intensity distribution ("top hat") is required. For example, in material processing applications, a uniform intensity distribution ensures that the entire laser spot is processed evenly. It is also valuable in situations where the laser light is primarily used for illumination, as uniform illumination creates identical features that all appear to have the same brightness regardless of where they are in the illuminated field, simplifying the image processing task and increasing contrast and resolution.

There are several techniques and methods to achieve a uniform distribution pattern. Low-cost laser-based devices often use Gaussian beam sources that can be physically cut by an aperture to form a pseudo-flat top profile.

This is inefficient and there is a significant waste of energy in the outer regions of the Gaussian profile, but this engineering approach helps to minimize the complexity and overall cost of the devices.

Higher performance applications with higher efficiency requirements often use different types of refractive beam shapers.

These systems typically use field-mapping phase elements, such as aspheric lenses and diffractive elements, to simultaneously redistribute the irradiance and phase profile.

The amplitude and phase of the incident beam(s) are changed after passing through refractive optical elements like microoptics or surface engineered diffusers.

The output beam is highly efficient and wavelength independent within the range of the optical setup.

Refractive beam shapers provide uniform irradiance profile distribution and flat phase fronts.

A laser beam integrator or homogenizer is an optical element that could be formed by a light pipe (also called a homogenizing/integrator rod, light guide, or waveguide). Through the process of total internal reflection (TIR), a light pipe can transform the output of a highly non-uniform light source into a highly uniform or homogenized illumination.

It can be used with coherent laser sources as well as other incoherent light sources.

Most laser beam integrators are used to generate a homogenized top-hat distribution profile from incident Gaussian laser beams or other higher order multi-transverse modes.

### Summary of Invention

The invention is based on a light pipe as the main integrator, however, it has a unique optical setup because of a second stage integrator (Köhler integrator) which is refractive-based, along with custom surface engineered diffusers, and the overall optical setup and optical mounts.

The main integrator system consists of a light pipe, but an engineered surface diffuser could also be considered as an alternative, which should provide good results as well.

Following the principle of total internal reflection (TIR), it collects light from a non-uniform laser source within a focus coupling zone and provides uniform irradiance in the Fourier plane of the Fourier lens.

The outer illumination area is a superposition of these individual and total internal multi-reflections, providing a sharp cut-off known in the art as a top-hat or flat-top beam profile. Homogenization is improved when a diffuser is added in front of the light pipe's entry facet.

A second integrator based on a microlens array is added downstream to further improve the homogenization as a second stage of this invention.

To eliminate potential hotspots and achieve an even more uniform distribution profile, the beam can be diffused with an holographic refractive diffuser - with a custom-engineered surface - that provides a desired exit angle and with a transmittance greater than 97 percent.

The optical behavior and mechanical characteristics of the light pipe, microlenses, and engineered diffusers are also custom designed and carefully tuned to achieve excellent beam homogenization performance while minimizing light loss.

### Technical Problem

The purpose of the invention is to achieve a controlled, usually top hat, intensity profile based on non-uniform intensity laser beam sources supporting incident Gaussian laser beam(s) or other higher order multi-transverse modes in the visible, IR, or UV spectrum.

### Solution to Problem

The laser beam homogenizer-expander uses a main beam shaping element or light pipe (light integrator) and a second beam shaping element or microlens array (MLA), i.e. a second light integrator, which defines the top-hat intensity distribution output and thus provides a second homogenization stage.

The invention also includes various light diffusers, mirrors, filters, and output lenses.

### Advantageous Effects of Invention

The invention provides very accurate beam shaping performance with minimal light loss. Specifically, it achieves good homogenization at the desired output angle by fully integrating/blending one or more laser source wavelengths such as red, green, blue, and other wavelengths in the visible/non-visible spectrum.

When multi-wavelengths are used as the initial laser source, the output of the light engine provides good homogenization and color mixing, with almost no noticeable speckle, a near top-hat intensity profile, and no visible hot spots or interference patterns.

### Brief Description of Drawings

Figure 1 is a perspective view through the light engine according to the invention.
Figure 2 is a side view through the light engine according to the invention.
Figure 3 is a schematic structural view showing all the beam path setup with all the optical components and the laser light sources.
Figure 4 is a schematic view of an alternative beam path setup, including all optical components and a further example of an RGB laser source.

### Description of Embodiments

The present invention relates to a laser homogenizer-expander for generating a uniform laser output beam from one or more incident laser sources.

The laser homogenizer-expander comprises various optical components arranged along a beam path for shaping and homogenizing the incident laser beam(s) to achieve a top hat intensity profile output laser beam suitable for applications such as spectroscopy, material processing, fluorescence, heat treatment, communication, and entertainment.

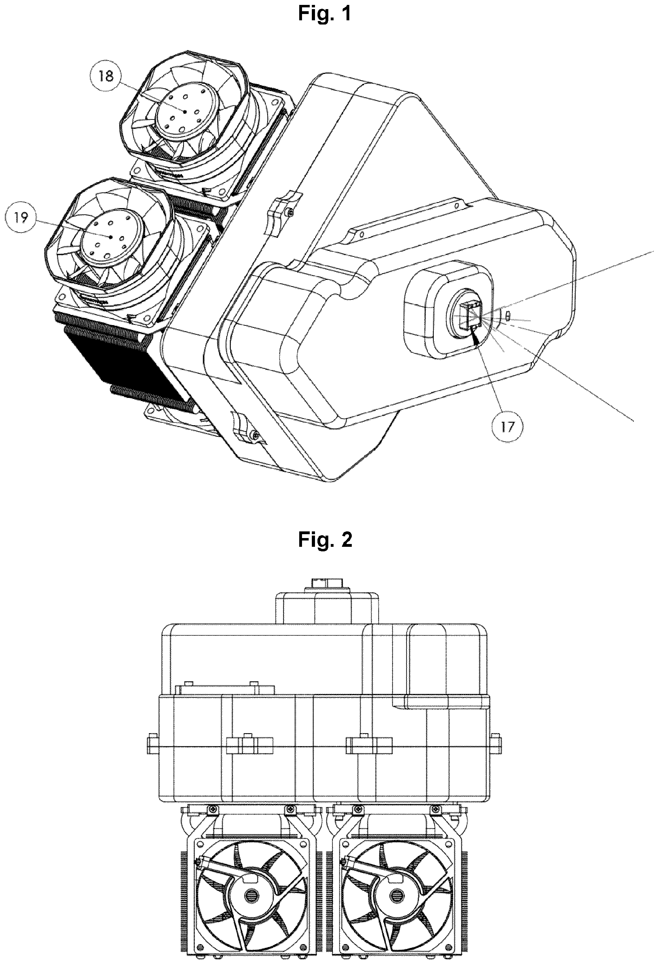

Figures 1 and 2 provide an overview of a complete lighting device (light engine) according to the invention and the cooling system (18,19) necessary to keep all the laser sources at the required working temperature.

The cooling system is based on a wicked heat pipe cooler consisting of an active forced air skived heatsink and copper heat pipes embedded in the heatsink.

Wicked heat pipes allow for effective internal liquid phase-change at any orientation of the device which is desirable depending on the application.

An output window (17) containing an optical diffuser and a wide-angle aspheric condenser lens. The output window (17) is centered along the optical axis for improved convenience depending on the application and, especially, in case further output optics are required.

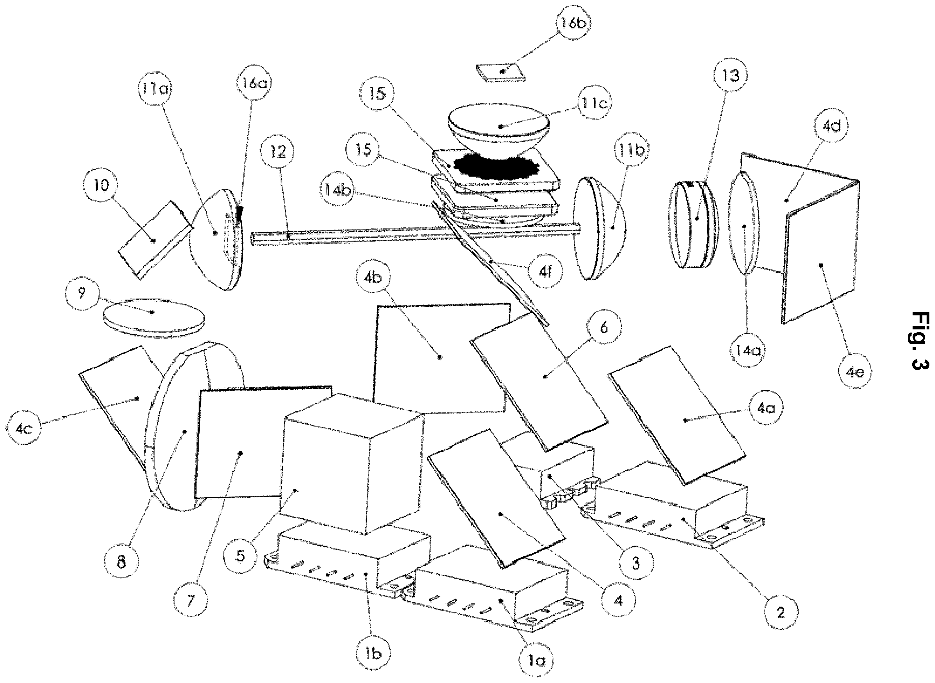

Figure 3 is a schematic structural view showing the beam path setup including all optical components and laser light sources.

The light emitter is composed of four laser light sources (1a, 1b, 2, 3), each of which consists of an array of several laser diodes.

Each light emitter (1a, 1b, 2, 3) comprises a multi-die package (MDP) composed of packaged laser die emitters and the corresponding short focal collimation lense array.

The red Laser color MDPs (1a, 1b) have a central emission wavelength of approximately 638nm and each consist of 28 laser emitters arranged in a 7-by-4 matrix.

Both red MDPs exhibit vertical polarization (S) and are combined in the optical axis by a polarizing beam splitter (PBS), (5) and a mirror (4) which reflects the beams coming from the first MDP (1a) towards the PBS (5) to combine the P- and S-polarized light.

The red MDP positioned behind the PBS (5) comprises a half-order waveplate in front of the collimator array to align the S- polarization component with the P-polarization component for the PBS to function properly.

The green color MDP (2) has a central emission wavelength of approximately 525 nm and also consists of 28 laser emitters arranged in a 7-by-4 matrix.

The blue color MDP (3) has a central emission wavelength of approximately 455 nm and consists of 14 laser emitters arranged in a 7-by-2 matrix.

A mirror (4a) reflects the 28 green beams at a perpendicular angle to a dichroic filter (6) which reflects blue light while letting green and red light pass through (B/GR).

The array of beams from the green MDP passes through the dichroic filter (6) and is reflected toward the mirror (4b) located in front of dichroic filter (6).

The array of beams coming from blue MDP (3) are reflected at an angle of 90 degrees by the dichroic filter (6) and thus directed toward the mirror (4b) as well.

At the mirror (4b), the array of overlapping beams coming from the green MDP (2) and blue MDP (3) takes on a color that may be perceived as cyan. The spectrally incoherent beams are effectively combined.

A further dichroic filter (7) reflects green and blue light while letting red light pass through (GB/R). The red beams output from the PBS (5) pass through this dichroic filter (7), reaching the PCX focusing lens (8).

The combined green and blue beams originating from the respective MDPs (2, 3) are reflected perpendicularly by means of a further mirror (4b) downstream of the dichroic filter (7), which alternatively reflects the beams perpendicularly toward the focusing lens (8).

At the focusing lens (8), the spectrally incoherent RGB beams originated from all MDPs (1a, 1b, 2, 3) are ultimately combined.

In this example, the laser light sources are based on MDPs. It is noted that alternative embodiments may apply a different kind of packaged laser array source, single TO-CAN laser diodes, optically pumped or other semiconductor laser, solid-state pumped laser, gas laser, laser banks, or even non-coherent light such as laser-pumped phosphor variants or light emitting diodes. All sources should exhibit a high degree of collimation to function properly within the system.

Downstream to focusing lens (8), the combined RGB beams are reflected upward towards a further mirror (10) and through the beam-shaping lens (9).

An aspheric short focal lens focuses the RGB beams originating from the mirror (10) into the light pipe (12) through a holographic diffuser (16a) whose purpose is to "break" at some degree the spatial coherency inherent to laser radiation, resulting in multiple rays (beamlets). This improves the homogenization effect inside the light pipe (12) by means of increasing number of reflexions inside the lightpipe due total internal reflection phenomenom (TIR).

The light pipe (12) has a hexagonal cross-section and consists of fused silica glass with broadband anti-reflective (BBAR) coating on both faces to reduce reflection losses on the beam entry as much as possible.

The angle and numerical apertures (NA) of the focusing lenses (8, 9, 11a) and light pipe (12) are calculated as per Snell's law to achieve fully total internal reflection (TIR) within the light pipe (12).

Initial RGB beam homogenization is effectively obtained after the light pipe (first integrator), and its output is collimated by means of an aspherical lens (11b) acting as a condenser lens.

Downstream of the condenser lens (11b), an achromatic PCX lens (13) serves as a relay beam-shaping lens. A telescope formed by two long-focus PCX lenses, namely, a Fourier lens (14a) and an image lens (14b), transports the light to a second optical or "Köhler" integrator formed by a dual microlens array (15).

The image lens (14b) directs the output of the light pipe (12) toward both microlenses (15) through zig-zag mirrors (4d, 4e) and further upwards by means of a reflecting mirror (4f).

To avoid overfilling of the lens aperture and ensuing loss of brightness, the diameter of individual beam lets at the downstream microlens array (15) falls short of its lens pitch. Such overfilling of the lens array might otherwise result in unwanted double images within the Fourier plane.

Downstream of the optical integrator, a further field lens in the form of a condenser lens (11c) serves to shape the output beam into an inverted cone of divergence θ, the desired angle generally depending on the envisaged application or integration with any downstream optical device. Other than achieving said divergence θ, focal length of integrator would appear largely noncritical.

A second holographic diffuser (16b), with a custom engineered surface, reduces any hot spots, speckle, or interference that might remain in the beam upon passing through the "second integrator" (15), further improving the blend of all RGB wavelengths and distribution profile of the final output beam.

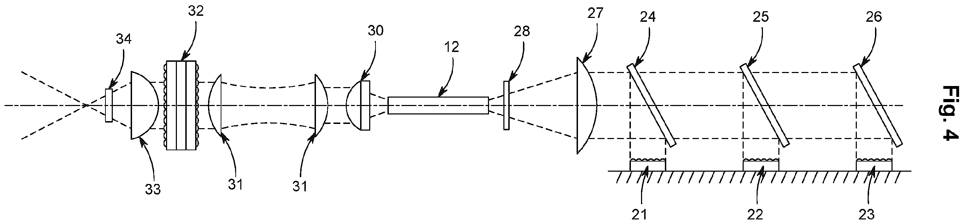

In the variant depicted in Figure 4, the optical components again include dichroic mirrors (24, 25) for combining red (21), green (23), and blue (22) laser light from corresponding laser chip arrays; a dielectric filter mirror (26); a plano-convex lens (27) for focusing the combined laser light into a hexagonal light pipe homogenizing rod which provides a first stage of homogenization via total internal reflection; a plano-convex achromatic relay lens (30) for collimating the homogenized light exiting the light pipe; a Keplerian 1:1 telescope (31); a microlens array pair (32) providing a second stage of homogenization; an aspheric condenser lens (33) for focusing the further homogenized light; and a holographic diffuser (34) for diffusing the focused light to achieve the top hat intensity profile output beam.

The dichroic mirrors (24, 25) combine the separate red, green, and blue laser wavelengths into a single multi-wavelength beam. The dielectric filter mirror (26) ensures high transmission of the combined beam. The plano-convex lens (27) focuses the beam into the entrance face of the light pipe (12), wherein the focused light undergoes multiple total internal reflections to achieve a first stage of homogenization. The homogenized light exiting the light pipe (12) is collimated by the plano-convex achromatic relay lens (30). The Keplerian telescope (31) provides unity magnification of the collimated beam. The microlens array pair (32) acts on the collimated beam to provide a second stage of homogenization. The aspheric condenser lens (33) focuses the further homogenized collimated beam, and the holographic diffuser (34) diffuses the focused light to achieve the top hat intensity profile output laser beam.

Additional components may be included, such as a holographic diffuser (28) between the plano-convex lens (27) and light pipe (12) to improve homogenization. All optical components are carefully designed, arranged, and tuned to maximize transmission efficiency while minimizing light loss, speckle, interference patterns, and non-uniformities. The optical components may be mounted in a housing with optomechanical components for stable alignment.

The exemplary laser homogenizer-expander according to Fig. 4 has a hexagonal cross-section light pipe homogenizer rod (12) made of fused silica. Three separate semiconductor laser chip arrays (1, 2, 3) emit red (638 nm), green (525 nm) and blue (455 nm) laser light, respectively.

The red and green beams are combined using a long-pass dichroic mirror (24) which reflects the 638 nm red light at 45° and transmits the 525 nm green light at 0°. The blue beam is then added using a short-pass dichroic mirror (25) which reflects the 455 nm blue light at 45° and transmits the combined red and green beams at 0°. A dielectric filter mirror (26) ensures high transmission of the combined RGB beam.

The combined beam is focused by a plano-convex lens (27) through an holographic diffuser (28) into the entrance face of the light pipe light pipe (12). The total internal reflections in the light pipe (12) homogenize the beam to a high degree. The homogenized output beam from the light pipe (12) is collimated by a plano-convex achromatic lens (30). A Keplerian 1:1 telescope (31) provides unity magnification of the collimated beam.

A pair of 1 mm pitch microlens arrays (32) further improve the homogenization. An aspheric condenser lens (33) focuses the beam over a length of 50 mm, and an engineered holographic diffuser (34) provides the final diffusion to achieve a top-hat profile output beam with high uniformity suitable for an entertainment laser projection application.

The optical components are arranged in a housing on optomechanical mounts for stable alignment of the beam path. The resulting output is a homogenized multi-wavelength laser beam with no noticeable speckle and less than 5 percent variation in intensity across its profile.

### Industrial Applicability

The invention is applicable throughout the entertainment industry. Its benefits further apply over a wide range of other applications that can be broadly classed as "illumination", including machine vision, inspection, entertainment FX, medical uses, etc. Specifically, the invention is useful for applications like microscopy, material processing, fluorescence, lighting fixtures, holography, fiber coupling, etc., where spectral properties of laser light is required (narrowband, monochromaticity) but a uniform distribution of the intensity is necessary at the same time.

### Reference Signs List

| Reference sign | Description |
|---|---|
| 1a, 1b, 2, 3 | MDP laser sources |
| 4, 4a, 4b, 4c, 4d, 4e, 4f, 10 | Dielectric > 95% (400-700 nm) mirrors |
| 6, 7 | Dichroic filters |
| 5 | Polarizing beam splitter |
| 15 | Microlens array |
| 12 | Light pipe |
| 8, 9, 11a, 11b, 13, 14a, 14b, 11c | Lenses |
| 16a, 16b | Engineered surface diffusers |
| θ | Output divergence angle |
| 21 | Multi-die package red laser chip array |
| 22 | Multi-die package blue laser chip array |
| 23 | Multi-die package green laser chip array |
| 24 | Dichroic R/GB |
| 25 | Dichroic B/GR |
| 26 | Dielectric full-spectrum mirror |
| 27 | Plano-convex lens (light pipe coupling) |
| 28 | First holographic diffuser |
| 30 | Plano-convex achromatic relay lens |
| 31 | Keplerian 1:1 telescope |
| 32 | Köhler integrator |
| 33 | Aspheric condenser lens |
| 34 | Second holographic diffuser |

## Claims

1. A laser beam homogenizer-expander apparatus comprising:
a light pipe (12) for receiving and homogenizing light from a laser source;
microlens arrays (32) for further homogenization of the light output from the light pipe (12); and
a holographic diffuser (8, 14) for diffusing the light output from the microlens array (32),
wherein the light pipe (12) and microlens arrays (32) are configured to establish a top-hat intensity distribution of the homogenized light.

2. The apparatus according to claim 1, wherein the light pipe (12) is a hexagonal light pipe homogenizing rod.

3. The apparatus according to claim 1 or 2, further comprising a plano-convex lens (27) for coupling light into the light pipe (12).

4. The apparatus according to any preceding claim, wherein the microlens arrays (32) form a Köhler integrator.

5. The apparatus according to any preceding claim, wherein the holographic diffuser (8, 14) exhibits a surface formed to provide a given exit angle and preferably exceed a given transmittance such as 97 percent.

6. The apparatus according to any preceding claim, further comprising a plano-convex achromatic relay lens (30) positioned to receive the light output from the light pipe (12).

7. The apparatus according to any preceding claim, further comprising a Keplerian 1:1 telescope (31) positioned to relay the light output from the microlens arrays (32).

8. The apparatus according to any preceding claim, further comprising an aspheric condenser lens (33) positioned to focus the light output from the holographic diffuser (34).

9. The apparatus according to any preceding claim, wherein the laser source comprises a red laser chip array (21), a blue laser chip array (22), and a green laser chip array (23).

10. The apparatus according to claim 9, further comprising:
a dichroic mirror (24) configured to combine light from the red laser chip array (21) and the blue and green laser chip arrays (2, 3); and
a dielectric full-spectrum mirror (26) positioned to reflect light combined by the dichroic mirror (24).

11. The apparatus according to claim 10, further comprising a second dichroic mirror (25) configured to combine light from the blue laser chip array (22) with light from the green laser chip array (23).

12. The apparatus according to any one of claims 9 to 11, wherein the laser source is configured to emit light in the visible, infrared, or ultraviolet spectrum.

13. The apparatus according to any preceding claim, designed for use in applications selected from the group consisting of spectroscopy, material processing, fluorescence, heat treatment, communication, and entertainment.

14. The apparatus according to any preceding claim, wherein the light pipe (12) consists of an alternative engineered surface for achieving homogenization.

15. The apparatus according to any preceding claim, wherein the laser source is configured to blend multiple wavelengths to provide color mixing within the output of the light engine.
